# FASCICULE DE BREVET EUROPEEN

(11) **EP 3 902 044 B1**
(45) Date de publication et mention de la délivrance du brevet: **20.04.2022**
(21) Numéro de dépôt: 21169720.6
(22) Date de dépôt: 21.04.2021
(51) Int. Cl.: H01M 8/249, H01M 8/04223, H01M 8/04537, H01M 8/04746, H01M 8/0438

(54) **SYSTÈME D'ALIMENTATION ÉLECTRIQUE ET PROCÉDÉ DE CONTRÔLE ASSOCIÉ**
ELEKTRISCHES STROMVERSORGUNGSSYSTEM UND ENTSPRECHENDES KONTROLLVERFAHREN
POWER SUPPLY SYSTEM AND ASSOCIATED CONTROL METHOD

(30) Priorité: 22.04.2020 FR 2004006
(43) Date de publication de la demande: 27.10.2021
(73) Titulaire: Naval Group, 75015 Paris (FR)
(72) Inventeur: FOUILLEN, Nanine, 44620 LA MONTAGNE (FR)
(74) Mandataire: Lavoix

(56) Documents cités:
- US-A1- 2001 049 038
- US-A1- 2007 065 711
- US-A1- 2019 288 311

## Description

La présente invention concerne un système d'alimentation électrique pour un navire.

La présente invention concerne également un procédé de contrôle d'un tel système d'alimentation pour un navire.

L'invention concerne le domaine du contrôle de fonctionnement des piles à combustible dans des navires, tels que des navires submersibles ou des navires de surface.

On connait déjà dans l'état de la technique des navires ayant des systèmes d'alimentation électrique comprenant des piles à combustible pour l'alimentation électrique, par exemple d'un réseau de bord.

Ainsi, de manière connue en soi, chaque pile à combustible comprend deux électrodes, et permet de générer une tension électrique à partir d'un combustible réducteur tel que l'hydrogène fourni sur l'une de ses électrodes, l'anode, et d'un oxydant, tel que l'oxygène, fourni sur l'autre électrode, la cathode.

Un gaz comprenant de l'hydrogène est par exemple produit par un procédé de reformage à partir d'un combustible, stocké dans un réservoir prévu à cet effet, et de l'eau ou de l'oxygène.

Lorsque les piles à combustible sont alimentées par le gaz comprenant de l'hydrogène issu de reformage, ce gaz contient des gaz non utiles à la production d'électricité.

Avec l'utilisation des piles à combustible et l'accumulation de ces gaz, on constate une diminution de la production électrique. Cette baisse de la production électrique conduit à l'arrêt du système d'alimentation électrique. Ceci est incompatible avec un fonctionnement continu attendu pour ce type de système.

On connaît également des systèmes permettant de purger une partie des gaz contenant les gaz non utiles lors du fonctionnement des piles à combustible. Cependant, ces systèmes ne permettent pas d'éviter une accumulation des gaz non utiles lors d'une longue durée de fonctionnement du système d'alimentation.

On conçoit alors que les systèmes d'alimentation électrique connus ne sont pas entièrement satisfaisants, car lors d'un fonctionnement prolongé, la production d'énergie électrique par le système d'alimentation est réduite. US 2007/065711 décrit un système de piles à combustible qui comprend une pluralité de modules indépendants, chaque module étant muni d'un circuit de recirculation. Une étape de purge est déclenchée en fonction de certains paramètres détectés. US 2019/288311 et US 2001/049038 décrivent des systèmes de piles à combustible comprenant une pluralité de modules indépendants. La charge totale requise par un consommateur est distribuée parmi les modules en tenant compte de leur état de dégradation ou en fonction d'un nombre minimal de modules au vu de leur puissance maximale.

Un but de la présente invention est alors d'obtenir un système d'alimentation permettant de garantir une production nominale d'énergie électrique en permanence.

À cet effet, l'invention a pour objet un système d'alimentation électrique pour un navire, comprenant une pluralité de piles à combustible ;
chaque pile à combustible étant configurée pour fonctionner sous une charge nominale et comprenant un système de cellules électrochimiques et au moins une boucle de recirculation ;
le système de cellules électrochimiques de chaque pile à combustible étant configuré pour recevoir un flux d'hydrogène via une entrée et pour éjecter un flux de sortie via au moins une sortie ;
la ou chaque boucle de recirculation de chaque pile à combustible étant configurée pour réinjecter au moins une partie du flux de sortie à l'entrée correspondante et comprenant des moyens d'évacuation ;
le système d'alimentation comprenant en outre :
   - des moyens de réattribution des charges entre les piles à combustible ; et
   - des moyens de contrôle d'évacuation aptes à identifier une pile à combustible à purger et pour cette pile à combustible, à activer les moyens de réattribution pour attribuer la charge nominale de cette pile aux autres piles à combustible et les moyens d'évacuation de la boucle de recirculation de cette pile à combustible pour purger un fluide parasite contenu dans le flux de sortie circulant dans cette boucle de recirculation.

Suivant d'autres aspects avantageux de l'invention, le système comprend une ou plusieurs des caractéristiques suivantes, prise(s) isolément ou suivant toutes les combinaisons techniquement possibles :
- Les moyens de réattribution sont aptes à augmenter ou diminuer le flux d'hydrogène reçu à l'entrée du système de cellules électrochimiques d'une pile à combustible respective en fonction de la réattribution de la charge à cette pile à combustible respective.
- Les moyens de contrôle d'évacuation sont aptes à interrompre le flux d'hydrogène reçu à l'entrée du système de cellules électrochimiques de la pile à combustible à purger.
- Les moyens de réattribution des charges sont aptes à réattribuer, après une purge du fluide parasite par activation des moyens d'évacuation de la boucle de recirculation de la pile à combustible à purger, la charge nominale à cette pile à combustible.
- Les moyens de contrôle d'évacuation sont aptes à identifier la pile à combustible à purger selon une règle prédéterminée.
- Les moyens de contrôle d'évacuation sont aptes à identifier la pile à combustible à purger en fonction d'une performance de chaque pile à combustible, la performance d'une pile à combustible dépendant d'une puissance électrique générée par cette pile à combustible par rapport au flux d'hydrogène reçu en entrée du système de cellules électrochimiques de cette pile à combustible.
- Les moyens de contrôle d'évacuation sont configurés pour introduire de l'azote dans la boucle de recirculation de la pile à combustible à purger.
- Le fluide parasite comprend des gaz inertes.

L'invention a également pour objet un procédé de contrôle d'un système d'alimentation électrique pour un navire, le système d'alimentation comprenant une pluralité de piles à combustible, chaque pile à combustible comprenant un système de cellules électrochimiques et au moins une boucle de recirculation ;
le procédé de contrôle comprenant une phase de fonctionnement nominal lors de laquelle chaque pile à combustible fonctionne sous une charge nominale, le système de cellules électrochimiques de chaque pile à combustible recevant un flux d'hydrogène via une entrée et éjecte un flux de sortie via au moins une sortie, la ou chaque boucle de recirculation de chaque pile à combustible réinjectant au moins une partie du flux de sortie à l'entrée correspondante ;
le procédé de contrôle comprenant en outre une phase de rétablissement d'une pile à combustible à purger comprenant :
   - une étape d'identification de la pile à combustible à purger ;
   - une étape de réattribution de la charge nominale de la pile à combustible à purger aux autres piles à combustible ;
   - une étape de purge d'un fluide parasite contenu dans le flux de sortie circulant dans la boucle de recirculation de la pile à combustible à purger.

Suivant un autre aspect avantageux de l'invention, le procédé comprend la caractéristique suivante : un flux d'hydrogène total reçu par la pluralité de piles à combustible est sensiblement constant entre la phase de fonctionnement nominal et la phase de rétablissement.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique d'un système d'alimentation pour un navire comprenant un système d'alimentation électrique selon l'invention, et
- [Fig 2] la figure 2 est une vue schématique d'une répartition de la puissance entre des piles à combustible lors du fonctionnement du système d'alimentation de la figure 1.

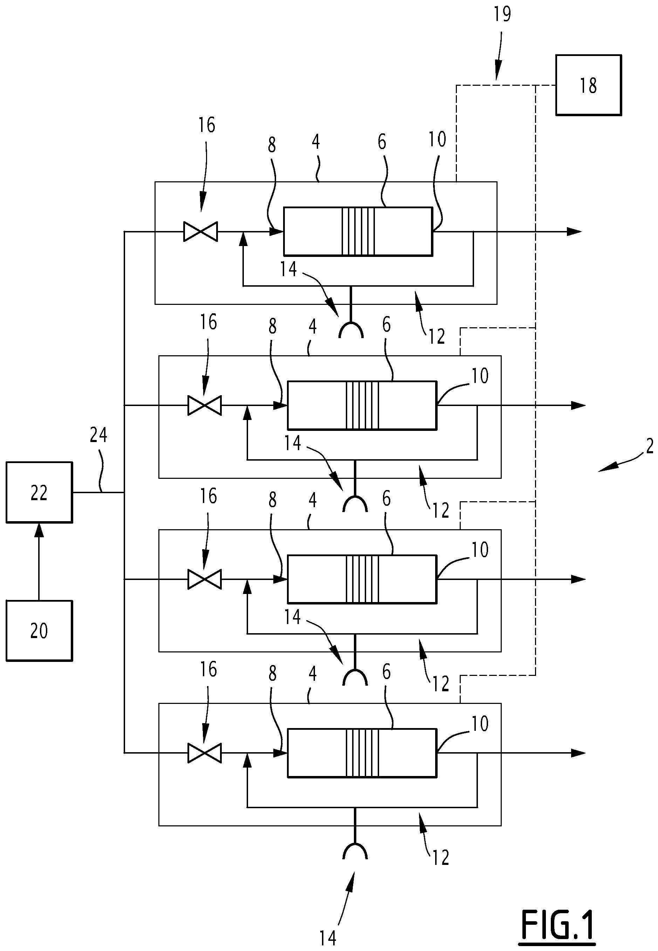

Sur la figure 1, un système d'alimentation 2 est configuré pour générer une puissance électrique pour un navire, tel qu'un véhicule submersible, comme par exemple un sous-marin, ou un navire de surface.

Le système d'alimentation 2 comprend une pluralité de piles à combustible 4. Par exemple, comme visible en particulier sur la figure 1, le système d'alimentation 2 comprend quatre piles à combustible 4.

Selon des variantes, le système d'alimentation 2 comprend deux, trois ou plus que quatre piles à combustible 4.

Chaque pile à combustible 4 est configurée pour fonctionner sous une charge nominale. La charge nominale est par exemple une charge prédéfinie et correspond en particulier à une puissance électrique prédéfinie à fournir ou un débit d'entrée prédéfini suivant le mode de pilotage. Le débit d'entrée prédéfini est notamment un débit prédéfini d'un flux d'hydrogène, respectivement pour chaque pile à combustible 4.

De préférence, chaque pile à combustible 4 est en outre apte à fonctionner sous une charge supérieure à la charge nominale. Par exemple, chaque pile à combustible 4 est surdimensionnée par rapport à sa charge nominale.

En particulier, le système d'alimentation 2 est surdimensionné de manière à être apte à fonctionner sous une charge supérieure à la charge nominale. Cela permet par exemple d'arrêter une pile à combustible 4 ou de diminuer la charge d'une pile à combustible 4 et de maintenir une production élevée d'énergie électrique.

Chaque pile à combustible 4 comprend un système de cellules électrochimiques 6. Chaque système de cellules électrochimiques 6 comprend en particulier une pluralité de cellules électrochimiques, également appelé empilement de cellules électrochimiques (de l'anglais « stack »).

Le système de cellules électrochimiques 6 de chaque pile à combustible 4 est configuré pour recevoir un flux d'hydrogène via une entrée 8 et pour éjecter un flux de sortie via au moins une sortie 10. Le flux de sortie comprend par exemple de l'eau et un fluide parasite.

Selon une variante, le système de cellules électrochimiques 6 de chaque pile à combustible 4 comprend une sortie pour un flux de sortie comprenant des gaz et une autre sortie pour l'eau.

Chaque système de cellules électrochimiques 6 est configuré pour produire une puissance électrique, de manière connue en soi, à partir de l'hydrogène et de l'oxygène. Par exemple, chaque système de cellules électrochimiques 6 est configuré pour recevoir un flux d'oxygène par une entrée dédiée, non représentée.

Chaque pile à combustible 4 comprend en outre au moins une boucle de recirculation 12.

La ou chaque boucle de recirculation 12 de chaque pile à combustible 4 est configurée pour réinjecter au moins une partie du flux de sortie à l'entrée 8 correspondante. Par exemple, la ou chaque boucle de recirculation est apte à recevoir un excès d'hydrogène compris dans le flux de sortie et à fournir cet excès à l'entrée correspondante.

Par exemple, chaque pile à combustible 4 comprend une seule boucle de recirculation 12. Selon des variantes, au moins une pile à combustible 4 comprend plusieurs boucles de recirculation 12, ou au moins deux piles à combustible 4 partagent une boucle de recirculation commune.

La ou chaque boucle de recirculation 12 comprend en outre des moyens d'évacuation 14. Les moyens d'évacuation 14 sont par exemple configurés pour laisser échapper un fluide contenu notamment dans la boucle de recirculation dans l'atmosphère du navire et/ou dans les environs du navire. Les moyens d'évacuation 14 comprennent par exemple une vanne.

Selon une variante mettant en œuvre une première sortie pour un flux de sortie comprenant des gaz et une deuxième sortie pour l'eau, les moyens d'évacuation 14 sont par exemple formés par la première sortie.

Le système d'alimentation 2 comprend en outre des moyens de réattribution 16 des charges entre les piles à combustible.

Par exemple, les moyens de réattribution 16 sont aptes à augmenter ou diminuer le flux d'hydrogène reçu à l'entrée 8 du système de cellules électrochimiques 6 d'une pile à combustible 4 respective en fonction de la réattribution de la charge à cette pile à combustible 4.

Par exemple, les moyens de réattribution 16 des charges sont configurés pour augmenter le flux d'hydrogène reçu à l'entrée 8 du système de cellules électrochimiques 6 d'une première pile à combustible 4 et de diminuer le flux d'hydrogène reçu à l'entrée correspondant d'une deuxième pile à combustible 4 différente de la première pile à combustible 4.

Par exemple, les moyens de réattribution 16 sont configurés pour réattribuer la charge de manière à ce que la somme des flux d'hydrogène reçus par les piles à combustible 4 du système d'alimentation 2 soit constante lors d'une réattribution.

Les moyens de réattribution 16 comprennent par exemple, pour chaque pile à combustible, un dispositif de régulation. Le dispositif de régulation est par exemple une vanne de régulation apte à réduire ou à augmenter le flux d'hydrogène reçu à l'entrée 8 du système de cellules électrochimiques 6 de la pile à combustible 4 respective.

En complément, les moyens de réattribution 16 sont également configurés pour modifier des flux d'oxygène, par exemple reçus par l'entrée respective, non représentée, du système de cellules électrochimiques 6 de chaque pile à combustible 4.

Le système d'alimentation 2 est par exemple apte à purger le fluide parasite accumulé notamment dans la boucle de recirculation 12 de chaque pile à combustible 4.

Ainsi, le système d'alimentation 2 comprend des moyens de contrôle d'évacuation 18 aptes à identifier une pile à combustible 4 à purger. Dans ce cas, les moyens de contrôle d'évacuation 18 sont aptes, pour cette pile à combustible 4, à activer les moyens de réattribution 16 pour attribuer la charge nominale de cette pile à combustible 4 aux autres piles à combustible.

Selon un exemple, les moyens de contrôle d'évacuation 18 sont aptes à identifier la pile à combustible 4 à purger selon une règle prédéterminée.

Par exemple, les moyens de contrôle d'évacuation 18 sont aptes à identifier la pile à combustible à purger en fonction d'une performance de chaque pile à combustible 4.

La performance d'une pile à combustible 4 dépend par exemple d'une puissance électrique générée par cette pile à combustible 4 par rapport au flux d'hydrogène reçu en entrée 8 du système de cellules électrochimiques 6 de cette pile à combustible 4.

Les moyens de contrôle d'évacuation 18 sont aptes en outre à activer les moyens d'évacuation 14 de la boucle de recirculation 12 de la pile à combustible 4 à purger, pour purger le fluide parasite contenu dans le flux de sortie circulant dans cette boucle de recirculation 12.

Par exemple, les moyens de contrôle d'évacuation 18 sont configurés pour introduire un gaz pour l'évacuation, tel que de l'azote, dans la boucle de recirculation 12 de la pile à combustible 4 à purger.

Les moyens de contrôle d'évacuation 18 sont ainsi configurés pour évacuer le fluide contenu dans la boucle de recirculation 12 concernée, comprenant le fluide parasite. De préférence, les moyens de contrôle d'évacuation 18 sont configurés pour évacuer la totalité de ce fluide.

En variante, les moyens de contrôle d'évacuation 18 sont configurés pour évacuer partiellement le fluide, par exemple une quantité sensiblement égale à 80% de la quantité du fluide contenu dans la boucle de recirculation 12. Dans ce cas, le fluide restant est consommé par la pile à combustible 4 jusqu'à l'arrêt de cette pile.

Le fluide parasite comprend par exemple des gaz inertes, tels que le dioxyde de carbone (CO2) et/ou le méthane (CH4).

Les moyens de contrôle d'évacuation 18 permettent ainsi de rétablir un fonctionnement nominal de la pile à combustible à purger, par exemple lorsque cette pile subit une baisse de performance suite à une accumulation du fluide parasite.

Par exemple, les moyens de contrôle d'évacuation 18 sont aptes à interrompre le flux d'hydrogène reçu à l'entrée 8 du système de cellules électrochimiques 6 de la pile à combustible 4 à purger. Dans ce cas, la pile à combustible 4 à purger est notamment configurée pour être à l'arrêt lors de la purge. En particulier, la pile à combustible 4 ne produit pas de puissance électrique lorsqu'elle est à l'arrêt.

Ceci permet de réduire la perte de l'hydrogène compris dans le fluide purgé par la purge par les moyens d'évacuation 14.

Les moyens de contrôle d'évacuation 18 comprennent par exemple un contrôleur relié par des connexions de contrôle 19 aux piles à combustible 4.

Les moyens de réattribution 16 des charges sont par exemple en outre aptes à réattribuer, après une purge du fluide parasite par activation des moyens d'évacuation 14 de la boucle de recirculation 12 de la pile à combustible 4 à purger, la charge nominale à cette pile à combustible 4.

Ainsi, les moyens de réattribution 16 sont par exemple aptes à augmenter, après la purge, le flux d'hydrogène à l'entrée 8 respective de la pile à combustible 4 à purger, et de diminuer le flux d'hydrogène à l'entrée respective de l'une ou plusieurs des autres piles à combustible 4.

Le système d'alimentation 2 comprend en outre un réservoir 20 de carburant et un module de reformage 22 de carburant. Le module de reformage 22 est par exemple configuré pour recevoir un carburant en entrée, par exemple à partir du réservoir de carburant 20, et pour générer le flux d'hydrogène. Le module de reformage 22 de carburant est ainsi configuré pour fournir le flux d'hydrogène à la pluralité de piles à combustible 4, notamment via une connexion 24 reliant le module de reformage 22 à l'entrée 8 du système de cellules électrochimiques 6 de chaque pile à combustible 4.

Dans ce qui suit, on décrit un procédé de contrôle du système d'alimentation.

Le procédé de contrôle comprend une phase de fonctionnement nominal et une phase de rétablissement de la pile à combustible 4 à purger.

Lors de la phase de fonctionnement nominal, chaque pile à combustible 4 fonctionne sous la charge nominale. Le système de cellules électrochimiques 6 de chaque pile à combustible 4 reçoit le flux d'hydrogène via l'entrée 8 et éjecte le flux de sortie via l'au moins une sortie 10.

La ou chaque boucle de recirculation 12 de chaque pile à combustible 4 réinjecte au moins une partie du flux de sortie à l'entrée 8 correspondante. Par exemple, le flux de sortie comprend un excès d'hydrogène, qui est réinjecté à l'entrée via la boucle de recirculation 12.

Le procédé de contrôle comprend en outre une phase de rétablissement de la pile à combustible 4 à purger. La phase de rétablissement comprend une étape d'identification, une étape de réattribution et une étape de purge.

Lors de l'étape d'identification, les moyens de contrôle d'évacuation 18 identifient une pile à combustible 4 à purger.

Lors de l'étape de réattribution, les moyens de contrôle d'évacuation 18 activent les moyens de réattribution 16 pour attribuer la charge nominale de la pile à combustible à purger aux autres piles à combustible 4.

Lors de l'étape de purge, les moyens de contrôle d'évacuation 18 activent les moyens d'évacuation 14 de la boucle de recirculation 12 de la pile à combustible 4 à purger. Le fluide parasite contenu dans le flux de sortie circulant dans cette boucle 12 est ainsi purgé.

En complément, le procédé comprend une étape d'arrêt d'une pile à combustible 4 à purger. Cette étape est par exemple mise en œuvre après l'étape de réattribution et avant l'étape de purge. Par exemple, lors de l'étape d'arrêt, les moyens de réattribution 16 interrompent le flux d'hydrogène reçu à l'entrée 8 du système de cellules électrochimiques 6 de la pile à combustible 4 à purger.

De préférence, le flux d'hydrogène total reçu par la pluralité de piles à combustible 6 est sensiblement constant entre la phase de fonctionnement nominal et la phase de rétablissement.

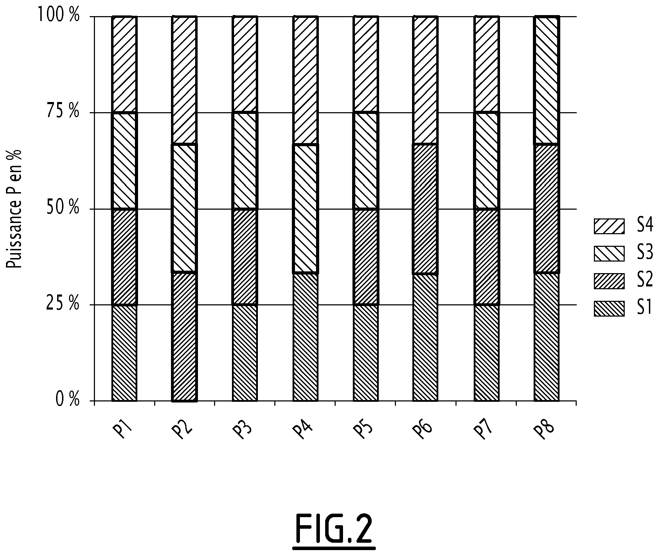

La figure 2 montre un exemple d'un fonctionnement du procédé de contrôle.

L'exemple montre huit phases de fonctionnement P1 à P8 du système d'alimentation 2. Pour chaque phase P1 à P8, la charge de chaque pile à combustible S1 à S4 est indiquée en pourcentage, à savoir le pourcentage de la puissance électrique P produite. La puissance électrique P égale à 100% correspond à la charge nominale du système d'alimentation 2.

Par exemple, lors des phases P1, P3, P5 et P7, chaque pile à combustible S1 à S4 présente une charge de 25%. Ces phases sont ainsi les phases de fonctionnement nominal.

Lors des phases intercalées, à savoir la phase P2 (entre la phase P1 et P3), la phase P4 (entre les phases P3 et P5), la phase P6 (entre les phases P5 et P7) et la phase P8 (après la phase P7), la charge de la pile à combustible 4 à purger est réattribuée aux autres piles à combustible 4. Ainsi, aucune puissance n'est produite par la pile à combustible à purger pendant la phase P2, P4, P6, P8 correspondante.

La pile à combustible 4 à purger est la pile S1 lors de la phase P2, la pile S2 lors de la phase P4, la pile S3 lors de la phase P6 et la pile S4 lors de la phase P8.

Les phases intercalés P2, P4, P6 et P8 sont ainsi des phases de rétablissement de la pile à combustible 4 à purger respective.

On conçoit que le système d'alimentation 2 présente un certain nombre d'avantages.

Le système d'alimentation 2 permet de garantir une production nominale d'énergie électrique en permanence. En effet, le système d'alimentation 2 permet d'éviter que la production d'énergie électrique soit réduite lors d'un fonctionnement prolongé à cause du fluide parasite accumulé dans la ou les boucles de recirculation 12.

En outre, grâce à la réattribution de la charge nominale, par exemple d'une puissance électrique prédéfinie à fournir ou du débit d'entrée prédéfini suivant le mode de pilotage, de la pile à combustible 4 à purger aux autres piles à combustible, la production d'électricité n'est pas interrompue. Ainsi, le système d'alimentation 2 permet d'obtenir une alimentation électrique en permanence.

La réattribution de la charge permet également de réduire le volume des gaz purgés, car la pile à combustible 4 à purger est par exemple à l'arrêt lors de la purge. Le fait de réduire le volume purgé permet d'augmenter l'efficacité du système d'alimentation 2, car peu de gaz contenant de l'hydrogène est dispersé dans l'atmosphère. De plus, cette faible concentration d'hydrogène dans les gaz purgés permet de réduire le risque d'explosion, notamment en environnement confiné.

## Revendications

1. Système d'alimentation (2) électrique pour un navire, comprenant une pluralité de piles à combustible (4) ;
chaque pile à combustible (4) étant configurée pour fonctionner sous une charge nominale et comprenant un système de cellules électrochimiques (6) et au moins une boucle de recirculation (12) ;
le système de cellules électrochimiques (6) de chaque pile à combustible (4) étant configuré pour recevoir un flux d'hydrogène via une entrée (8) et pour éjecter un flux de sortie via au moins une sortie (10) ;
la ou chaque boucle de recirculation (12) de chaque pile à combustible (4) étant configurée pour réinjecter au moins une partie du flux de sortie à l'entrée (8) correspondante et comprenant des moyens d'évacuation (14) ;
le système d'alimentation (2) étant **caractérisé en ce qu'**il comprend en outre :
- des moyens de réattribution (16) des charges entre les piles à combustible (4) ; et
- des moyens de contrôle d'évacuation (18) aptes à identifier une pile à combustible (4) à purger et pour cette pile à combustible (4), à activer les moyens de réattribution (16) pour attribuer la charge nominale de cette pile aux autres piles à combustible (4) et les moyens d'évacuation (14) de la boucle de recirculation (12) de cette pile à combustible (4) pour purger un fluide parasite contenu dans le flux de sortie circulant dans cette boucle de recirculation (12).

2. Système d'alimentation (2) selon la revendication 1, dans lequel les moyens de réattribution (16) sont aptes à augmenter ou diminuer le flux d'hydrogène reçu à l'entrée (8) du système de cellules électrochimiques (6) d'une pile à combustible (4) respective en fonction de la réattribution de la charge à cette pile à combustible (4) respective.

3. Système d'alimentation (2) selon la revendication 1 ou 2, dans lequel les moyens de contrôle d'évacuation (18) sont aptes à interrompre le flux d'hydrogène reçu à l'entrée (8) du système de cellules électrochimiques (6) de la pile à combustible (4) à purger.

4. Système d'alimentation (2) selon l'une quelconque des revendications précédentes, dans lequel les moyens de réattribution (16) des charges sont aptes à réattribuer, après une purge du fluide parasite par activation des moyens d'évacuation (14) de la boucle de recirculation (12) de la pile à combustible (4) à purger, la charge nominale à cette pile à combustible (4).

5. Système d'alimentation (2) selon l'une quelconque des revendications précédentes, dans lequel les moyens de contrôle d'évacuation (18) sont aptes à identifier la pile à combustible (4) à purger selon une règle prédéterminée.

6. Système d'alimentation (2) selon l'une quelconque des revendications précédentes, dans lequel les moyens de contrôle d'évacuation (18) sont aptes à identifier la pile à combustible (4) à purger en fonction d'une performance de chaque pile à combustible (4), la performance d'une pile à combustible (4) dépendant d'une puissance électrique générée par cette pile à combustible (4) par rapport au flux d'hydrogène reçu en entrée (8) du système de cellules électrochimiques (6) de cette pile à combustible (4).

7. Système d'alimentation (2) selon l'une quelconque des revendications précédentes, dans lequel les moyens de contrôle d'évacuation (18) sont configurés pour introduire de l'azote dans la boucle de recirculation (12) de la pile à combustible (4) à purger.

8. Système d'alimentation (2) selon l'une quelconque des revendications précédentes, dans lequel le fluide parasite comprend des gaz inertes.

9. Procédé de contrôle d'un système d'alimentation (2) électrique pour un navire, le système d'alimentation (2) comprenant une pluralité de piles à combustible (4), chaque pile à combustible (4) comprenant un système de cellules électrochimiques (6) et au moins une boucle de recirculation (12) ;
le procédé de contrôle comprenant une phase de fonctionnement nominal lors de laquelle chaque pile à combustible (4) fonctionne sous une charge nominale, le système de cellules électrochimiques (6) de chaque pile à combustible (4) recevant un flux d'hydrogène via une entrée (8) et éjecte un flux de sortie via au moins une sortie (10), la ou chaque boucle de recirculation (12) de chaque pile à combustible (4) réinjectant au moins une partie du flux de sortie à l'entrée (8) correspondante ;
le procédé de contrôle comprenant en outre une phase de rétablissement d'une pile à combustible (4) à purger comprenant :
- une étape d'identification de la pile à combustible (4) à purger ;
- une étape de réattribution de la charge nominale de la pile à combustible (4) à purger aux autres piles à combustible (4) ;
- une étape de purge d'un fluide parasite contenu dans le flux de sortie circulant dans la boucle de recirculation (12) de la pile à combustible (4) à purger.

10. Procédé selon la revendication précédente, dans lequel un flux d'hydrogène total reçu par la pluralité de piles à combustible (4) est sensiblement constant entre la phase de fonctionnement nominal et la phase de rétablissement.

## Patentansprüche

1. Elektrisches Stromversorgungssystem (2) für ein Schiff, umfassend eine Vielzahl von Brennstoffzellen (4),
wobei jede Brennstoffzelle (4) konfiguriert ist, um unter einer nominalen Last zu funktionieren, und umfassend ein System von elektrochemischen Zellen (6) und mindestens eine Rezirkulationsschleife (12);
wobei das System von elektrochemischen Zellen (6) jeder Brennstoffzelle (4) konfiguriert ist, um einen Wasserstoffstrom über einen Eingang (8) aufzunehmen, und um einen Ausgangsstrom über mindestens einen Ausgang (10) auszustoßen;
wobei die oder jede Rezirkulationsschleife (12) jeder Brennstoffzelle (4) konfiguriert ist, um mindestens einen Teil des Ausgangsstroms (8) am entsprechenden Eingang erneut zu injizieren, und umfassend Ableitungseinrichtungen (14);
wobei das Versorgungssystem (2) **dadurch gekennzeichnet ist, dass** es außerdem Folgendes umfasst:
- Mittel zur erneuten Zuteilung (16) von Lasten zwischen den Brennstoffzellen (4); und
- Mittel zur Steuerung der Ableitung (18), die ausgelegt sind, um eine Brennstoffzelle (4) zu identifizieren, die gepurgt werden soll, und für diese Brennstoffzelle (4) die Mittel zur erneuten Zuteilung (16) zu aktivieren, um die nominale Last dieser Zelle den anderen Brennstoffzellen (4) und den Ableitungseinrichtungen (14) der Rezirkulationsschleife (12) dieser Brennstoffzelle (4) zuzuteilen, um ein Parasitfluid zu purgen, das im Ausgangsstrom enthalten ist, der in dieser Rezirkulationsschleife (12) zirkuliert.

2. Versorgungssystem (2) nach Anspruch 1, wobei die Mittel zur erneuten Zuteilung (16) ausgelegt sind, um den Wasserstoffstrom, der am Eingang (8) des Systems von elektrochemischen Zellen (6) einer entsprechenden Brennstoffzelle (4) erhalten wird, je nach der erneuten Zuteilung der Last an diese entsprechende Brennstoffzelle (4) zu erhöhen oder zu verringern.

3. Versorgungssystem (2) nach Anspruch 1 oder 2, wobei die Mittel zur Steuerung der Ableitung (18) ausgelegt sind, um den Wasserstoffstrom zu unterbrechen, der am Eingang (8) des Systems von elektrochemischen Zellen (6) der Brennstoffzelle (4), die gepurgt werden soll, erhalten wird.

4. Versorgungssystem (2) nach einem der vorhergehenden Ansprüche, wobei die Mittel zur erneuten Zuteilung (16) der Lasten ausgelegt sind, um nach einem Purgen des Parasitfluids durch die Aktivierung der Ableitungseinrichtungen (14) der Rezirkulationsschleife (12) der Brennstoffzelle (4), die gepurgt werden soll, die nominale Last dieser Brennstoffzelle (4) erneut zuzuteilen.

5. Versorgungssystem (2) nach einem der vorhergehenden Ansprüche, die Mittel zur Steuerung der Ableitung (18) ausgelegt sind, um die Brennstoffzelle (4), die gepurgt werden soll, gemäß einer vorbestimmten Regel zu identifizieren.

6. Versorgungssystem (2) nach einem der vorhergehenden Ansprüche, wobei die Mittel zur Steuerung der Ableitung (18) ausgelegt sind, um die Brennstoffzelle (4), die gepurgt werden soll, je nach einer Leistung jeder Brennstoffzelle (4) zu identifizieren, wobei die Leistung einer Brennstoffzelle (4) von einer elektrischen Leistung abhängt, die von dieser Brennstoffzelle (4) mit Bezug auf den Wasserstoffstrom erzeugt wird, der am Eingang (8) des Systems von elektrochemischen Zellen (6) dieser Brennstoffzelle (4) erhalten wird.

7. Versorgungssystem (2) nach einem der vorhergehenden Ansprüche, wobei die Mittel zur Steuerung der Ableitung (18) konfiguriert sind, um Stickstoff in die Rezirkulationsschleife (12) der Brennstoffzelle (4), die gepurgt werden soll, einzuführen.

8. Versorgungssystem (2) nach einem der vorhergehenden Ansprüche, wobei das Parasitfluid inerte Gase umfasst.

9. Verfahren zur Steuerung eines elektrischen Stromversorgungssystems (2) für ein Schiff, wobei das Versorgungssystem (2) eine Vielzahl von Brennstoffzellen (4) umfasst, wobei jede Brennstoffzelle (4) ein System von elektrochemischen Zellen (6) und mindestens eine Rezirkulationsschleife (12) umfasst;
wobei das Verfahren zur Steuerung eine Phase der normalen Funktion umfasst, während der jede Brennstoffzelle (4) unter einer nominalen Last funktioniert, wobei das System von elektrochemischen Zellen (6) jeder Brennstoffzelle (4) einen Wasserstoffstrom über einen Eingang (8) aufnimmt und einen Ausgangsstrom über mindestens einen Ausgang (10) ausstößt, wobei die oder jede Rezirkulationsschleife (12) jeder Brennstoffzelle (4) mindestens einen Teil des Ausgangsstroms am entsprechenden Eingang (8) erneut injiziert;
wobei das Verfahren zur Steuerung außerdem eine Phase der Widerherstellung einer Brennstoffzelle (4), die gepurgt werden soll, umfasst, umfassend:
- einen Schritt des Identifizierens der Brennstoffzelle (4), die gepurgt werden soll;
- einen Schritt des erneuten Zuteilens der nominalen Last der Brennstoffzelle (4), die gepurgt werden soll, an die anderen Brennstoffzellen (4);
- einen Schritt des Purgens eines Parasitfluids, enthalten im Ausgangsstrom, der in der Rezirkulationsschleife (12) der Brennstoffzelle (4), die gepurgt werden soll, zirkuliert.

10. Verfahren nach dem vorhergehenden Anspruch, wobei ein gesamter Wasserstoffstrom, erhalten von der Vielzahl von Brennstoffzellen (4), im Wesentlichen zwischen der Phase der nominalen Funktion und der Phase der erneuten Zuweisung konstant ist.

## Claims

1. An electrical power supply system (2) for a ship, comprising a plurality of fuel cells (4);
each fuel cell (4) being configured to operate at nominal load and comprising a system of electrochemical cells (6) and at least one recirculation loop (12);
the system of electrochemical cells (6) of each fuel cell (4) being configured to receive a flow of hydrogen via an inlet (8) and to eject an outlet flow via at least one outlet (10);
the or each recirculation loop (12) of each fuel cell (4) being configured to reinject at least part of the outlet flow at the corresponding inlet (8) and comprising discharge means (14);
the supply system (2) being **characterized in that** it further comprises:
- means (16) for reallocating the charges between the fuel cells (4); and
- discharge control means (18) able to identify a fuel cell (4) to be purged and for this fuel cell (4), to activate the reallocation means (16) to allocate the nominal load of this cell to the other fuel cells (4) and the discharge means (14) of the recirculation loop (12) of this fuel cell (4) to purge a parasitic fluid contained in the outlet flow circulating in this recirculation loop (12).

2. The power supply system (2) according to claim 1, wherein the reallocation means (16) are able to increase or decrease the flow of hydrogen received at the inlet (8) of the system of electrochemical cells (6) of a respective fuel cell (4) as a function of the reallocation of the charge to this respective fuel cell (4).

3. The power supply system (2) according to claim 1 or 2, wherein the discharge control means (18) are able to interrupt the flow of hydrogen received at the inlet (8) of the system of electrochemical cells (6) of the fuel cell (4) to be purged.

4. The power supply system (2) according to any one of the preceding claims, wherein the means (16) for reallocating charges are able to reallocate, after purging parasitic fluid by activating the discharge means (14) of the recirculation loop (12) of the fuel cell (4) to be purged, the nominal load to this fuel cell (4).

5. The power supply system (2) according to any one of the preceding claims, wherein the discharge control means (18) are able to identify the fuel cell (4) to be purged according to a predetermined rule.

6. The power supply system (2) according to any one of the preceding claims, wherein the discharge control means (18) are able to identify the fuel cell (4) to be purged based on a performance of each fuel cell (4), the performance of a fuel cell (4) depending on electrical power generated by this fuel cell (4) relative to the flow of hydrogen received at the inlet (8) of the system of electrochemical cells (6) of this fuel cell (4).

7. The power supply system (2) according to any one of the preceding claims, wherein the discharge control means (18) are configured to introduce nitrogen into the recirculation loop (12) of the fuel cell (4) to be purged.

8. The power supply system (2) according to any one of the preceding claims, wherein the parasitic fluid comprises inert gases.

9. A method for controlling an electrical power supply system (2) for a ship, the power supply system (2) comprising a plurality of fuel cells (4), each fuel cell (4) comprising a system of electrochemical cells (6) and at least one recirculation loop (12);
the control method comprising a nominal operating phase during which each fuel cell (4) operates at nominal load, the system of electrochemical cells (6) of each fuel cell (4) receiving a flow of hydrogen via an inlet (8) and ejecting an outlet flow via at least one outlet (10), the or each recirculation loop (12) of each fuel cell (4) reinjecting at least part of the outlet flow at the corresponding inlet (8);
the control method further comprising a phase of reestablishing a fuel cell (4) to be purged, comprising:
- a step of identifying the fuel cell (4) to be purged;
- a step of reallocating the nominal load of the fuel cell (4) to purge the other fuel cells (4);
- a step of purging a parasitic fluid contained in the outlet flow circulating in the recirculation loop (12) of the fuel cell (4) to be purged.

10. The method according to the preceding claim, wherein a total flow of hydrogen received by the plurality of fuel cells (4) is substantially constant between the nominal operating phase and the reestablishment phase.
